(19) **Europäisches Patentamt / European Patent Office / Office européen des brevets**

(11) **EP 4 654 680 A1**

(12) **EUROPEAN PATENT APPLICATION**
published in accordance with Art. 153(4) EPC

(43) Date of publication:
26.11.2025 Bulletin 2025/48

(21) Application number: 24755959.4

(22) Date of filing: 30.01.2024

(51) International Patent Classification (IPC):
*H04W 52/02* (2009.01)

(52) Cooperative Patent Classification (CPC):
H04W 52/02; H04W 68/00; H04W 76/28;
Y02D 30/70

(86) International application number:
PCT/CN2024/074608

(87) International publication number:
WO 2024/169585 (22.08.2024 Gazette 2024/34)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 13.02.2023 CN 202310155155

(71) Applicant: Huawei Technologies Co., Ltd.
Shenzhen, Guangdong 518129 (CN)

(72) Inventors:
• XIANG, Hongyu
  Shenzhen, Guangdong 518129 (CN)
• CHEN, Lei
  Shenzhen, Guangdong 518129 (CN)
• KUANG, Yiru
  Shenzhen, Guangdong 518129 (CN)
• SHI, Yulong
  Shenzhen, Guangdong 518129 (CN)

(74) Representative: Gill Jennings & Every LLP
The Broadgate Tower
20 Primrose Street
London EC2A 2ES (GB)

(54) **COMMUNICATIONS METHOD AND APPARATUS**

(57) This application relates to the field of communication technologies, and provides a communication method and apparatus. The method includes: A terminal device determines a paging frame, and monitors scheduling information of a first paging message and scheduling information of a second paging message in a time window of a paging hyperframe. The time window is determined based on a first paging time window and a second paging time window, or the time window is determined based on the first paging time window. A start position of the first paging time window is determined based on a first extended discontinuous reception cycle, and a start position of the second paging time window is determined based on a second extended discontinuous reception cycle. The first paging message is initiated by a core network, and the second paging message is initiated by an access network. According to the method, the terminal device may simultaneously monitor, in the time window of the paging hyperframe, the first paging message initiated by the CN and the second paging message initiated by a RAN, to reduce a quantity of times the terminal device needs to wake up, thereby reducing power consumption of the terminal device and increasing standby time of the terminal device.

FIG. 4

**Description**

CROSS-REFERENCE TO RELATED APPLICATIONS

This application claims priority to Chinese Patent Application No. 202310155155.1, filed with the China National Intellectual Property Administration on February 13, 2023 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

In a system like a new radio (new radio, NR) system, a terminal device in a radio resource control (radio resource control, RRC) idle (idle) mode or an RRC inactive (inactive) mode may periodically wake up in a discontinuous reception (discontinuous reception, DRX) manner to monitor a paging (paging) message. The terminal device determines a paging occasion (paging occasion, PO) based on a DRX configuration, and performs blind detection at the PO. If a physical downlink control channel (physical downlink control channel, PDCCH) is detected through blind detection, and a physical downlink shared channel (physical downlink shared channel, PDSCH) scheduled by the PDCCH includes a paging message for paging the terminal device, the terminal device determines that the terminal device needs to access a network, and switches to an RRC connected mode. Otherwise, the terminal device maintains the RRC idle (idle) mode or the RRC inactive (inactive) mode.

In addition to DRX, the terminal device may alternatively periodically wake up to monitor the PO by using an extended discontinuous reception (extended discontinuous reception, eDRX) mechanism. A periodic wake-up periodicity may be referred to as an eDRX cycle. A difference between DRX and eDRX lies in different cycle duration. The eDRX cycle is greater than a DRX cycle. Therefore, using the eDRX mechanism can increase sleep duration of the terminal device, and reduce a quantity of times of periodic wake-up, to further reduce power consumption.

The paging message monitored by the terminal device may be classified into two types: a paging message initiated by a core network (core network, CN) and a paging message initiated by a radio access network (radio access network, RAN). Different paging messages are sent in different periodicities. Therefore, a plurality of eDRX cycles are configured on a network side, for example, a first eDRX cycle and a second eDRX cycle are configured. The terminal device monitors, based on the first eDRX cycle, the paging message initiated by the CN, and monitors, based on the second eDRX cycle, the paging message initiated by the RAN.

Because the terminal device needs to monitor, based on different eDRX cycles, the paging message initiated by the CN and the paging message initiated by the RAN, the terminal device needs to frequently wake up, and this increases the power consumption of the terminal device, and reduces standby time of the terminal device.

SUMMARY

This application provides a communication method and apparatus, to reduce power consumption of a terminal device for monitoring to a paging message, and increase standby time of the terminal device.

According to a first aspect, this application provides a communication method. The method is performed by a terminal device or a module in the terminal device. An example in which the method is performed by a terminal device is used for description herein. The method includes: The terminal device determines a paging hyperframe. The paging hyperframe is determined based on a first extended discontinuous reception cycle configured by a core network, the paging hyperframe is determined based on a least common multiple of the first extended discontinuous reception cycle and a second extended discontinuous reception cycle configured by an access network, or the paging hyperframe is determined based on a largest value in the first extended discontinuous reception cycle and the second extended discontinuous reception cycle. The second extended discontinuous reception cycle is greater than 10.24 seconds. The terminal device monitors scheduling information of a first paging message and scheduling information of a second paging message in a time window of the paging hyperframe. The time window is determined based on a first paging time window and a second paging time window, or the time window is determined based on the first paging time window. A start position of the first paging time window is determined based on the first extended discontinuous reception cycle, and a start position of the second paging time window is determined based on the second extended discontinuous reception cycle. The first paging message is initiated by the core network, and the second paging message is initiated by the access network.

According to the method, the terminal device may simultaneously monitor, in the time window of the paging hyperframe, the first paging message initiated by the CN and the second paging message initiated by a RAN, to reduce a quantity of times the terminal device needs to wake up because of monitoring a paging message, thereby reducing power consumption of the terminal device and increasing standby time of the terminal device.

In a possible implementation, that the time window is determined based on the first paging time window and the second paging time window includes:

A start position of the time window in the paging hyperframe is determined based on the first extended discontinuous reception cycle if a length of the first paging time window is greater than or equal to a length of the second paging time window; or a start position of the time window in the paging hyperframe is determined based on the second extended discontinuous reception cycle if the length of the first paging time window is less than the length of the second paging time window.

In the foregoing method, the start position of the time window is equal to a start position of a paging time window with a largest length in the first paging time window and the second paging time window, to simplify a process of determining the time window by the terminal device, and improving monitoring efficiency.

In a possible implementation, a length of the time window is equal to a largest length in a length of the first paging time window and a length of the second paging time window.

In the foregoing method, it may be ensured that the terminal device can monitor all paging occasions in the first paging time window and the second paging time window, to avoid a case in which a paging message cannot be received.

In a possible implementation, that the time window is determined based on the first paging time window includes: A start position of the time window in the paging hyperframe is equal to the start position of the first paging time window in the paging hyperframe.

In the foregoing method, the start position of the time window is equal to the start position of the first paging time window, and an existing start position determining method may be used, to further simplify a process of determining the time window by the terminal device, improve monitoring efficiency, and improve system compatibility.

In a possible implementation, a length of the time window is equal to a length of the first paging time window.

In a possible implementation, a length of the time window is equal to a largest length in a length of the first paging time window and a length of the second paging time window.

In a possible implementation, the scheduling information of the first paging message and the scheduling information of the second paging message are located in a paging frame of the time window. The paging frame is determined based on a first parameter $T1$. The first parameter $T1$ is determined based on at least one of a default discontinuous reception cycle, a first discontinuous reception cycle corresponding to the first paging message, and a second discontinuous reception cycle corresponding to the second paging message. The default discontinuous reception cycle is from system information broadcast by an access network device.

In a possible implementation, the paging frame includes paging occasions of the scheduling information of the first paging message and the scheduling information of the second paging message, and indexes of the paging occasions in the paging frame are determined based on a second parameter $T2$, where the second parameter $T2$ is determined based on at least one of the default discontinuous reception cycle and the first discontinuous reception cycle.

In a possible implementation, the scheduling information of the first paging message and the scheduling information of the second paging message are located in a paging frame of the time window. The paging frame is determined based on a first parameter $T1$ in a period from a start position of the time window to a preset position. The first parameter $T1$ is determined based on at least one of a default discontinuous reception cycle, a first discontinuous reception cycle corresponding to the first paging message, and a second discontinuous reception cycle corresponding to the second paging message. The preset position is determined based on the start position of the time window and a smallest length in the length of the first paging time window and the length of the second paging time window.

The paging frame is determined based on a third parameter $T3$ in a period from the preset position to an end position of the time window. The third parameter $T3$ is determined based on at least one of the default discontinuous reception cycle and the first discontinuous reception cycle if the length of the first paging time window is greater than or equal to the length of the second paging time window, or the third parameter $T3$ is determined based on at least one of the default discontinuous reception cycle and the second discontinuous reception cycle if the length of the first paging time window is less than the length of the second paging time window. The end position of the time window is determined based on the start position of the time window and the length of the time window.

In the foregoing method, different periodicities are used to monitor the paging message in different parts of the time window, to perform paging monitoring by using differentiated periodicities. A longer periodicity may be used to monitor the paging message from the preset position to the end position of the time window, to further reduce power consumption of the terminal device.

In a possible implementation, the paging frame includes paging occasions of the scheduling information of the first paging message and the scheduling information of the second paging message, and indexes of the paging occasions in the paging frame are determined based on a second parameter $T2$, where the second parameter $T2$ is determined based on at least one of a default discontinuous reception cycle and the first discontinuous reception cycle; or indexes of the paging occasions in the paging frame are determined based on the third parameter T3.

In a possible implementation, when the paging hyperframe is determined based on the least common multiple of the first extended discontinuous reception cycle and the second extended discontinuous reception cycle, or the paging hyperframe is determined based on the largest value in the first extended discontinuous reception cycle and the second extended discontinuous reception cycle, a hyper system frame number H-SFN of the paging hyperframe satisfies the following form:

$$\text{H-SFN mod } T_X = (\text{UE\_ID\_H mod } T_X),$$

where

Tx represents the least common multiple of the first extended discontinuous reception cycle and the second extended discontinuous reception cycle or the largest value in the first extended discontinuous reception cycle and the second extended discontinuous reception cycle, UE_ID_H is determined based on an identifier of the terminal device, and mod represents a modulo operation.

According to a second aspect, this application provides a communication method. The method is performed by an access network device or a module in the access network device. An example in which the method is performed by an access network device is used for description herein. The method includes: The access network device determines a paging hyperframe. The paging hyperframe is determined based on a least common multiple of a first extended discontinuous reception cycle and a second extended discontinuous reception cycle configured by an access network, or the paging hyperframe is determined based on a largest value in the first extended discontinuous reception cycle and the second extended discontinuous reception cycle. The second extended discontinuous reception cycle is greater than 10.24 seconds. The access network device sends scheduling information of a first paging message or scheduling information of a second paging message in a time window of the paging hyperframe. The time window is determined based on a first paging time window and a second paging time window, or the time window is determined based on the first paging time window. A start position of the first paging time window is determined based on the first extended discontinuous reception cycle, and a start position of the second paging time window is determined based on the second extended discontinuous reception cycle. The first paging message is initiated by a core network, and the second paging message is initiated by the access network.

In a possible implementation, that the time window is determined based on the first paging time window and the second paging time window includes:

A start position of the time window in the paging hyperframe is determined based on the first extended discontinuous reception cycle if a length of the first paging time window is greater than or equal to a length of the second paging time window; or a start position of the time window in the paging hyperframe is determined based on the second extended discontinuous reception cycle if the length of the first paging time window is less than the length of the second paging time window.

In a possible implementation, the length of the time window is equal to a largest length in the length of the first paging time window and the length of the second paging time window.

In a possible implementation, that the time window is determined based on the first paging time window includes:

A start position of the time window in the paging hyperframe is equal to the start position of the first paging time window in the paging hyperframe.

In a possible implementation, a length of the time window is equal to a length of the first paging time window.

In a possible implementation, the length of the time window is equal to a largest length in the length of the first paging time window and the length of the second paging time window.

In a possible implementation, the scheduling information of the first paging message and the scheduling information of the second paging message are located in a paging frame of the time window. The paging frame is determined based on a first parameter T1. The first parameter T1 is determined based on at least one of a default discontinuous reception cycle, a first discontinuous reception cycle corresponding to the first paging message, and a second discontinuous reception cycle corresponding to the second paging message. The default discontinuous reception cycle is from system information broadcast by an access network device.

In a possible implementation, the paging frame includes paging occasions of the scheduling information of the first paging message and the scheduling information of the second paging message, and indexes of the paging occasions in the paging frame are determined based on a second parameter T2, where the second parameter T2 is determined based on at least one of the default discontinuous reception cycle and the first discontinuous reception cycle.

In a possible implementation, the scheduling information of the first paging message and the scheduling information of the second paging message are located in a paging frame of the time window. The paging frame is determined based on a first parameter T1 in a period from a start position of the time window to a preset position. The first parameter T1 is determined based on at least one of a default discontinuous reception cycle, a first discontinuous reception cycle corresponding to the first paging message, and a second discontinuous reception cycle corresponding to the second paging message. The preset position is determined based on the start position of the time window and a smallest length in the length of the first paging time window and the length of the second paging time window.

The paging frame is determined based on a third parameter T3 in a period from the preset position to an end position of the time window. The third parameter T3 is determined based on at least one of the default discontinuous reception cycle and the first discontinuous reception cycle if the length of the first paging time window is greater than or equal to the length of the second paging time window, or the third parameter T3 is determined based on at least one of the default discontinuous reception cycle and the second discontinuous reception cycle if the length of the first paging time window is less than the length of the second paging time window. The end position of the time window is determined based on the start position of the time window and the length of the time window.

In a possible implementation, the paging frame includes paging occasions of the scheduling information of the first paging message and the scheduling information of the second paging message, and indexes of the paging occasions in the paging frame are determined based on a second parameter T2, where the second parameter T2 is determined based on at least one of a default discontinuous reception cycle and the first discontinuous reception cycle; or indexes of the paging occasions in the paging frame are determined based on the third parameter T3.

In a possible implementation, when the paging hyperframe is determined based on the least common multiple of the first extended discontinuous reception cycle and the second extended discontinuous reception cycle, or the paging hyperframe is determined based on the largest value in the first extended discontinuous reception cycle and the second extended discontinuous reception cycle, a hyper system frame number H-SFN of the paging hyperframe satisfies the following form:

$$\text{H-SFN mod } T_X = (UE\_ID\_H \text{ mod } T_X),$$

where
Tx represents the least common multiple of the first extended discontinuous reception cycle and the second extended discontinuous reception cycle or the largest value in the first extended discontinuous reception cycle and the second extended discontinuous reception cycle, UE_ID_H is determined based on an identifier of the terminal device, and mod represents a modulo operation.

According to a third aspect, an embodiment of this application provides a communication apparatus. The apparatus may be used in a terminal device, and has a function of implementing the method performed by the terminal device in the first aspect.

The communication apparatus may be implemented by hardware, or may be implemented by executing corresponding software by hardware. The hardware or the software includes one or more units or modules corresponding to the foregoing functions.

In a possible implementation, the communication apparatus includes a processor. The processor is configured to support the communication apparatus in performing a corresponding function of the terminal device in the foregoing method. The communication apparatus may further include a memory. The memory may be coupled to the processor, and the memory stores program instructions and data that are necessary for the communication apparatus. Optionally, the communication apparatus further includes a communication interface. The communication interface is configured to support communication between the communication apparatus and devices such as an access network device.

In a possible implementation, the communication apparatus includes corresponding functional modules configured to implement the steps in the foregoing method. The function may be implemented by hardware, or may be implemented by executing corresponding software by hardware. The hardware or software includes one or more modules corresponding to the foregoing functions.

In a possible implementation, a structure of the communication apparatus includes a processing unit and a communication unit. These units may perform corresponding functions in the foregoing method examples. For details, refer to the description in the method according to the first aspect. Details are not described herein again.

According to a fourth aspect, this application further provides a communication apparatus. The apparatus may be used in an access network device, and has a function of implementing the method performed by the access network device in the second aspect.

The communication apparatus may be implemented by hardware, or may be implemented by executing corresponding software by hardware. The hardware or the software includes one or more units or modules corresponding to the foregoing functions.

In a possible implementation, the communication apparatus includes a processor. The processor is configured to support the communication apparatus in performing a corresponding function of the access network device in the foregoing method. The communication apparatus may further include a memory. The memory may be coupled to the processor, and the memory stores program instructions and data that are necessary for the communication apparatus.

Optionally, the communication apparatus further includes a communication interface. The communication interface is configured to support communication between the communication apparatus and devices such as a terminal device.

In a possible implementation, the communication apparatus includes corresponding functional modules configured to implement the steps in the foregoing method. The function may be implemented by hardware, or may be implemented by executing corresponding software by hardware. The hardware or software includes one or more modules corresponding to the foregoing functions.

In a possible implementation, a structure of the communication apparatus includes a processing unit and a communication unit. These units may perform corresponding functions in the foregoing method examples. For details, refer to the description in the method according to the third aspect. Details are not described herein again.

According to a fifth aspect, a communication apparatus is provided, including a processor and an interface circuit. The interface circuit is configured to receive a signal from a communication apparatus other than the communication apparatus, and transmit the signal to the processor, or send a signal from the processor to a communication apparatus other than the communication apparatus. The processor is configured to implement the method in either of the first aspect and the second aspect, and any possible implementation of any one of the aspects by using a logic circuit or by executing code instructions.

According to a sixth aspect, a communication apparatus is provided, including a processor and an interface circuit. The interface circuit is configured to receive a signal from a communication apparatus other than the communication apparatus, and transmit the signal to the processor, or send a signal from the processor to a communication apparatus other than the communication apparatus. The processor is configured to implement the functional modules of the method in either of the first aspect and the second aspect, and any possible implementation of any one of the aspects by using a logic circuit or by executing code instructions.

According to a seventh aspect, a computer-readable storage medium is provided. The computer-readable storage medium stores a computer program or instructions. When the computer program or the instructions are executed by a processor, the method in either of the first aspect and the second aspect, and any possible implementation of any one of the aspects is implemented.

According to an eighth aspect, a computer program product storing instructions is provided, and when the instructions are run by a processor, the method according to either of the first aspect and the second aspect, and any possible implementation of any one of the aspects is implemented.

According to a ninth aspect, a chip is provided. The chip includes a processor, further includes a memory, and is configured to implement the method in either of the first aspect and the second aspect, and any possible implementation of any one of the aspects. The chip may alternatively include another module and another discrete device.

According to a tenth aspect, a communication system is provided. The communication system includes an apparatus (like a terminal device) configured to implement the method provided in the first aspect and an apparatus (like an access network device) configured to implement the method provided in the second aspect.

According to an eleventh aspect, a communication system is provided. The communication system includes a terminal device and an access network device.

The access network device is configured to determine a paging hyperframe, and send scheduling information of a first paging message or scheduling information of a second paging message in a time window of the paging hyperframe.

The terminal device is configured to determine a paging hyperframe, and monitor scheduling information of a first paging message and scheduling information of a second paging message in a time window of the paging hyperframe.

The paging hyperframe is determined based on a first extended discontinuous reception cycle configured by a core network, the paging hyperframe is determined based on a least common multiple of the first extended discontinuous reception cycle and a second extended discontinuous reception cycle configured by an access network, or the paging hyperframe is determined based on a largest value in the first extended discontinuous reception cycle and the second extended discontinuous reception cycle. The second extended discontinuous reception cycle is greater than 10.24 seconds. The time window is determined based on a first paging time window and a second paging time window, or the time window is determined based on the first paging time window. A start position of the first paging time window is determined based on the first extended discontinuous reception cycle, and a start position of the second paging time window is determined based on the second extended discontinuous reception cycle. The first paging message is initiated by the core network, and the second paging message is initiated by the access network.

BRIEF DESCRIPTION OF DRAWINGS

FIG. 1 is a diagram of a network architecture applicable to an embodiment of this application;
FIG. 2 is a diagram of eDRX paging according to an embodiment of this application;
FIG. 3 is a diagram of eDRX paging according to an embodiment of this application;

FIG. 4 is a schematic flowchart of a communication method according to an embodiment of this application;

FIG. 5 is a diagram of a position relationship between a first PTW and a second PTW according to an embodiment of this application;

FIG. 6 is a diagram of a time window according to an embodiment of this application;

FIG. 7 is a diagram of a structure of a communication apparatus according to an embodiment of this application; and

FIG. 8 is a diagram of a structure of a communication apparatus according to an embodiment of this application.

DESCRIPTION OF EMBODIMENTS

The following clearly and completely describes technical solutions in embodiments of this application with reference to accompanying drawings in embodiments of this application. It is clear that the described embodiments are merely some but not all of embodiments of this application. The terms "first" and "second", corresponding term numbers, and the like in this specification, the claims, and the accompanying drawings of this application are intended to distinguishing between similar objects, and do not necessarily describe a specific sequence or order. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

The communication method provided in embodiments of this application may be applied to various mobile communication systems, for example, internet of things (internet of things, IoT), narrow band internet of things (narrow band internet of things, NB-IoT), long term evolution (long term evolution, LTE), a 5th generation (5th generation, 5G) communication system (for example, 5G new radio (new radio, NR)), a hybrid architecture of LTE and 5G, or a new communication system emerging in 6G or future communication development. Alternatively, the communication system may be a machine to machine (machine to machine, M2M) network, a machine type communication (machine type communication, MTC) network, or another network.

A method and an apparatus provided in embodiments of this application are based on a same or similar technical concept. Because problem resolving principles of the method and the apparatus are similar, mutual reference may be made to implementations of the apparatus and the method. Repeated descriptions are not described.

In this application, the access network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB) a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like; may be an access network device in a 5G mobile communication system, for example, a next generation NodeB (next generation NodeB, gNB), a transmission reception point (transmission reception point, TRP), or a TP in an NR system; or one antenna panel or one group of antenna panels (including a plurality of antenna panels) of a base station in the 5G mobile communication system. Alternatively, the access network device may be a network node that forms a gNB or a transmission point, for example, a BBU or a distributed unit (distributed unit, DU). A specific technology and a specific device form used by the access network device are not limited in embodiments of this application.

In embodiments of this application, a terminal device may be a device with a wireless transceiver function or a chip that may be disposed in any device, or may be referred to as user equipment (user equipment, UE), an access terminal, a subscriber unit, a subscriber station, a mobile station, a remote station, a remote terminal, a mobile device, a user terminal, a wireless communication device, a user agent, or a user apparatus. In embodiments of this application, the terminal device may be a mobile phone (mobile phone), a tablet computer (Pad), a computer with a wireless transceiver function, a virtual reality (virtual reality, VR) terminal, an augmented reality (augmented reality, AR) terminal, a wireless terminal in industrial control (industrial control), a wireless terminal in self driving (self driving), or the like. A specific technology and a specific device form used by the terminal device are not limited in embodiments of this application.

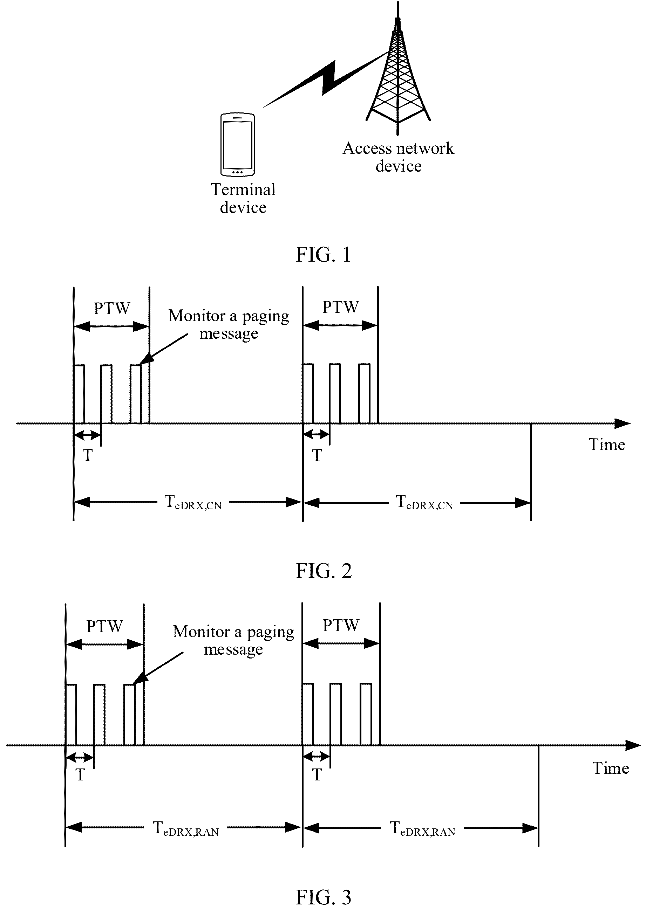

FIG. 1 is a diagram of a network architecture applicable to this application. As shown in FIG. 1, a terminal device may access an access network device, to obtain a service of an external network (for example, a data network (data network, DN)) via the access network device, or communicate with another device via the access network device. Such a network may further include another device. This is not limited in this application.

In FIG. 1, the terminal device may be configured to be in an RRC idle mode, an RRC inactive mode, or an RRC active mode. A terminal device in the RRC idle mode needs to monitor a paging message from a CN. A terminal device in the RRC inactive mode needs to monitor a paging message from the CN and a paging message from a RAN. The paging message from the RAN may be briefly referred to as a RAN paging message, and is a paging message sent to the terminal device in a RAN-based notification area (RAN-based notification area, RNA) when an access network device (for example, a base station) receives data or signaling that needs to be sent to the terminal device. The paging message from the CN may be briefly referred to as a CN paging message, and is a paging message sent to the terminal device via an access network device (for example, a base station) when a core network device needs to page the terminal device.

A process in which the terminal device monitors a paging message is as follows: The terminal device monitors a physical downlink control channel (physical downlink control channel, PDCCH) at a PO, and determines, based on the monitored PDCCH, whether there is a paging message that needs to be received by the terminal device. When the monitored PDCCH includes downlink control information (downlink control information, DCI) scrambled by using a paging radio network temporary identity (paging radio network temporary identity, P-RNTI), a paging message is received on a PDSCH scheduled by using the DCI. If it is determined, based on content of the paging message, that the paging message is a paging message for paging the terminal device, the terminal device accesses the network, and switches to an RRC connected mode; otherwise, the terminal device maintains the RRC idle mode or the RRC inactive mode.

Because the terminal device in the RRC inactive mode needs to monitor the CN paging message and the RAN paging message, two sets of parameters may be configured for the terminal device. One set of parameters is used for monitoring the CN paging message, and the other set of parameters is used for monitoring the RAN paging message. The parameters used for monitoring the CN paging message may include information such as an eDRX cycle, a window length of a paging time window (paging time window, PTW), and a specific (specific) paging periodicity of the terminal device. The parameters used for monitoring the RAN paging message may include information such as an eDRX cycle and a window length of a PTW.

It is assumed that the eDRX cycle corresponding to the CN paging message is represented by $T_{eDRX,CN}$, and the eDRX cycle corresponding to the RAN paging message is represented by $T_{eDRX,RAN}$. For the eDRX cycle corresponding to the CN paging message, if the eDRX cycle is longer than 10.24 seconds (seconds, s), a PTW may be configured in the eDRX cycle.

For example, as shown in FIG. 2, in the eDRX cycle $T_{eDRX,CN}$ corresponding to the CN paging message, the terminal device enters a sleep state outside the PTW, and the terminal device monitors the CN paging message by a periodicity T in the PTW.

For the RAN paging message, a PTW may be configured or not configured in the eDRX cycle. When the PTW is configured in the eDRX cycle, for example, the eDRX cycle is greater than 10.24 seconds (seconds, s), as shown in FIG. 3, in the eDRX cycle $T_{eDRX,RAN}$ corresponding to the RAN paging message, the terminal device enters a sleep state outside the PTW, and the terminal device monitors the paging message by a periodicity T in the PTW.

T in FIG. 2 and FIG. 3 is a smallest value in a periodicity of the RAN paging message (briefly referred to as a RAN paging periodicity below), a specific (specific) paging periodicity (if configured) of the terminal device, and a default paging periodicity. The default paging periodicity is broadcast by the access network device. If the RAN paging periodicity and the specific paging periodicity are not configured, the paging message is monitored by using the default paging periodicity.

When there is a PTW, in a process in which the terminal device monitors a paging message, the terminal device and the access network device need to determine a paging hyperframe (paging hyperframe, PH) in which the PTW is located and a system frame number (system frame number, SFN) corresponding to a start position of the PTW in the paging hyperframe. One hyperframe includes 1024 system frames. The terminal device may determine a position of a paging frame (paging frame, PF) in the PTW, to perform monitoring at a PO in the PF. The PO is located in the paging frame, or a start position of the PO is located in the paging frame.

A hyperframe corresponding to a hyper system frame number (hyper system frame number, H-SFN) that satisfies the following form may be used as the PH in which the PTW is located:

$$\text{H-SFN mod } T_{eDRX,H} = (\text{UE\_ID\_H mod } T_{eDRX,H}) \ (1)$$

$T_{eDRX,H}$ is an eDRX cycle. For the CN paging message, $T_{eDRX,H}$ is equal to the eDRX cycle $T_{eDRX,CN}$ of the CN paging message. For the RAN paging message, $T_{eDRX,H}$ is equal to the eDRX cycle $T_{eDRX,RAN}$ of the RAN paging message.

UE_ID_H is determined based on an identifier of the terminal device. For example, UE_ID_H is 13 most significant bits of a hash identifier, and the hash identifier is determined based on identification information of the terminal device. For example, the identification information of the terminal device is a 5G temporary mobile subscriber identity (serving-temporary mobile subscriber identity, S-TMSI) of the terminal device. 32 least significant bits of the 5G S-TMSI are used, and a frame check sequence of the 32 bits is used as the hash identifier. mod represents a modulo operation.

For example, in a paging hyperframe, an SFN of a system frame in which a start position of a PTW is located satisfies the following formula:

$$\text{SFN} = 128 * i_{eDRX}, \text{ and } i_{eDRX} = \text{floor}(\text{UE\_ID\_H}/T_{eDRX,H}) \text{ mod } 8 \ (2)$$

floor() indicates a round-down operation.

For example, in a PTW, an SFN of a PF satisfies the following formula:

$$(SFN+PF\_offset) \bmod T=(T \operatorname{div} N)*(UE\_ID \bmod N) \quad (3)$$

T is a smallest value in the RAN paging periodicity, the specific paging periodicity of the terminal device, and the default paging periodicity. UE_ID is determined based on the identification information of the terminal device. For example, the identification information of the terminal device is the 5G S-TMSI of the terminal device. 10 least significant bits (in a non-eDRX mode) or 12 least significant bits (in an eDRX mode) of the 5G S-TMSI are used as UE_ID.

One PF may include a plurality of POs, and an index i_s of a PO monitored by the terminal device in the PF may satisfy the following formula:

$$i\_s=floor(UE\_ID/N) \bmod Ns \quad (4)$$

PF_offset is an offset used for determining the PF, and is carried in a system information block 1 (system information block 1, SIB1) sent by the access network device. Ns represents a quantity of POs included in one PF. N is a total quantity of PFs included in one paging periodicity, and N may be a value in a set {T, T/2, T/4, T/8, T/16, T/32, T/64, T/128, T/256}. A network side may indicate a value of N from the set. For example, the network side indicates N=T/2, and the terminal device may determine the value of N based on a value of T.

It may be learned from the foregoing description that, because the terminal device needs to monitor, based on different eDRX cycles, the paging message initiated by the CN and the paging message initiated by the RAN, the terminal device needs to frequently wake up, and this increases power consumption of the terminal device, and reduces standby time of the terminal device. To resolve this problem, this application provides a method, to reduce a quantity of times a terminal device wakes up, thereby reducing power consumption of the terminal device and improving standby time of the terminal device.

A network architecture and a service scenario that are described in this application are intended to describe the technical solutions in this application more clearly, but do not constitute a limitation on the technical solutions provided in this application. A person of ordinary skill in the art may know that with evolution of the network architecture and emergence of a new service scenario, the technical solutions provided in this application are also applicable to similar technical problems.

In this application, interaction between an access network device and the terminal device is used as an example for description. An operation performed by the access network device may alternatively be performed by a module in the access network device. For example, the module may be a chip of the access network device. An operation performed by the terminal device may alternatively be performed by a module in the terminal device. For example, the module may be a chip of the terminal device. It may be understood that a specific structure of an execution entity of the method provided in embodiments of this application is not particularly limited in the following embodiments, provided that a program that records code of the method provided in embodiments of this application can be run to perform communication according to the method provided in embodiments of this application. For example, the execution entity may be a terminal device or a functional module that can invoke and execute a program in the terminal device, or may be an access network device or a functional module that can invoke and execute a program in the access network device. The following uses only the terminal device or the access network device as an example for description.

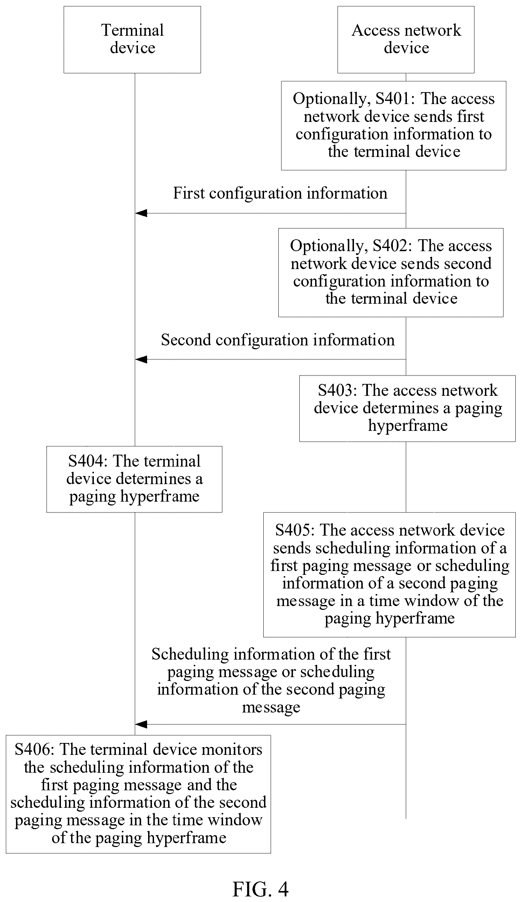

With reference to the foregoing descriptions, FIG. 4 is a schematic flowchart of a communication method according to an embodiment of this application. Refer to FIG. 4. The method includes the following steps.

Optionally, S401: An access network device sends first configuration information to a terminal device, and correspondingly, the terminal device receives the first configuration information from the access network device.

The first configuration information includes at least one of the following: a first eDRX cycle $T_{eDRX\_CN}$, a first DRX cycle $T_{DRX\_CN}$, and a window length $L_{eDRX\_CN}$ of a first PTW.

In a paging hyperframe, a start position of the first PTW may be determined based on the first eDRX cycle. For example, a value of an SFN of a system frame in which the start position of the first PTW is located may be determined according to the foregoing formula (2). The terminal device monitors a CN paging message in the first PTW. The CN paging message is initiated by a core network. In this application, the CN paging message may also be referred to as a first paging message.

The first configuration information may be allocated by the core network. For example, the first configuration information may be in non-access stratum (non-access stratum, NAS) signaling. The NAS signaling is from the core network, and is sent by a core network device to the access network device, and then forwarded by the core network device to the terminal device.

Optionally, S402: The access network device sends second configuration information to the terminal device, and correspondingly, the terminal device receives the second configuration information from the access network device.

The second configuration information may be allocated by an access network, and the second configuration information may be in RRC signaling. For example, the second configuration information may be carried in an RRC connection release (RRC connection release) message or an RRC release (release) message.

The second configuration information includes at least one of the following: a second eDRX cycle $T_{eDRX\_RAN}$, a second DRX cycle $T_{DRX\_RAN}$, and a length $L_{eDRX\_RAN}$ of a second PTW.

In a paging hyperframe, a start position of the second PTW may be determined based on the second eDRX cycle. For example, a value of an SFN of a system frame in which the start position of the second PTW is located may be determined according to the foregoing formula (2). The terminal device monitors a RAN paging message in the second PTW. The RAN paging message is initiated by the access network. In this application, the RAN paging message may also be referred to as a second paging message.

In an implementation, the length $L_{eDRX\_RAN}$, of the second PTW, indicated by the access network device via the second configuration information may be equal to the length $L_{eDRX\_CN}$, of the first PTW, allocated by the core network CN.

In an implementation, the second configuration information does not include the length $L_{eDRX\_RAN}$ of the second PTW, and it is agreed in advance that the length $L_{eDRX\_RAN}$ of the second PTW is equal to the length $L_{eDRX\_CN}$ of the first PTW in the first configuration information.

In an implementation, the terminal device supports monitoring of a PO when a PO in the first PTW is aligned with a PO in the second PTW, or the terminal device supports monitoring of the RAN paging message in the first PTW. The access network device may indicate, in system information, that scheduling information of the RAN paging message is to be sent on a PO in the first PTW.

S401 and S402 are optional steps. If S401 and S402 are not performed, the terminal device may obtain the first configuration information and the second configuration information in another manner. This is not limited in this application.

A sequence of performing S401 and S402 is not limited, and S401 and S402 may be performed sequentially or simultaneously.

S403: The access network device determines a paging hyperframe.

S404: The terminal device determines a paging hyperframe.

A sequence of performing S403 and S404 is not limited, and S403 and S404 may be performed sequentially or simultaneously.

In S404, the terminal device is in an RRC inactive mode.

The paging hyperframe in S403 and S404 may be a hyper system frame including the first PTW and the second PTW. If the first eDRX cycle is equal to the second eDRX cycle, a first paging hyperframe including the first PTW and a second paging hyperframe including the second PTW coincide or overlap. The first paging hyperframe and the second paging hyperframe are actually a same hyper system frame, and the first PTW and the second PTW are located in a same paging hyperframe.

If the first eDRX cycle is not equal to the second eDRX cycle, the first paging hyperframe and the second paging hyperframe coincide or overlap at an interval of a fixed quantity of hyper system frames. In other words, a hyper system frame number of the first paging hyperframe is the same as a hyper system frame number of the second paging hyperframe, and the first PTW and the second PTW are located in a same paging hyperframe. A value of the fixed quantity may be a least common multiple of the first eDRX cycle and the second eDRX cycle.

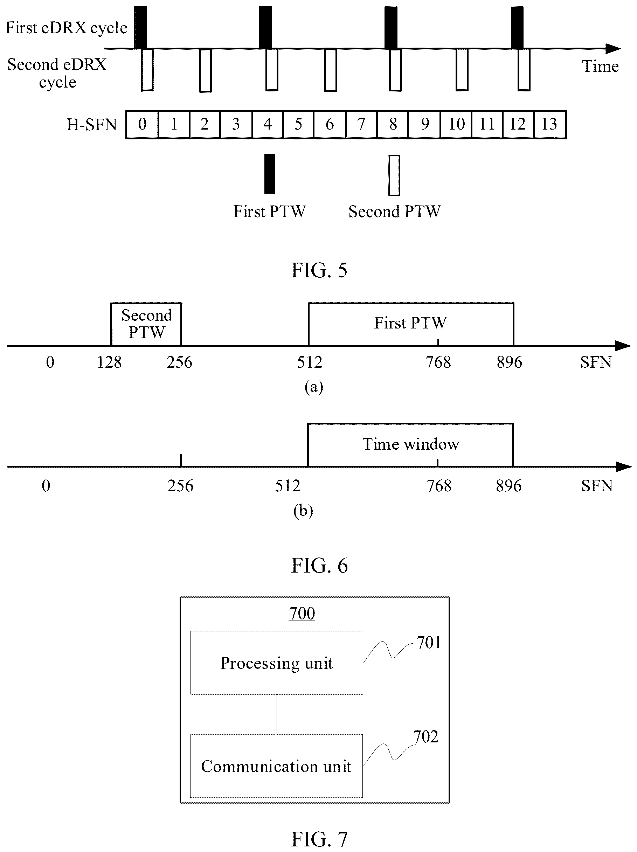

For example, as shown in FIG. 5, it is assumed that a value of UE_ID_H is 4, the first eDRX cycle is four hyper system frames, and the second eDRX cycle is two hyper system frames. With reference to the foregoing formula (1), H-SFNs of first paging hyperframes are sequentially 0, 4, 8, 12, and the like. In other words, hyper system frames whose hyper system frame numbers are 0, 4, 8, 12, and the like include first PTWs. H-SFNs of second paging hyperframes are sequentially 0, 2, 4, 8, 10, 12, and the like. In other words, hyper system frames whose hyper system frame numbers are 0, 2, 4, 8, 10, 12, and the like include second PTWs. At an interval of four hyper system frames, the first PTW and the second PTW are located in a same paging hyperframe. For example, in the figure, hyper system frames whose H-SFNs are 0, 4, 8, 12, and the like each include the first PTW and the second PTW.

In this application, there may be a plurality of implementations of how to specifically determine the paging hyperframe.

In a first implementation, the paging hyperframe is determined based on the first eDRX cycle. The first eDRX cycle may be configured by the core network. In this implementation, the first eDRX cycle may be greater than 10.24 seconds, and the second eDRX cycle may be greater than 10.24 seconds.

For example, a hyper system frame number H-SFN of the paging hyperframe satisfies the following form:

$$\text{H-SFN mod } T_{eDRX,CN} = (\text{UE\_ID\_H mod } T_{eDRX,CN}) \ (5)$$

$T_{eDRX,CN}$ represents the first eDRX cycle. mod represents a modulo operation. UE_ID_H is determined based on an identifier of the terminal device. For example, UE_ID_H is 13 most significant bits of a hash identifier, and the hash identifier is determined based on identification information of the terminal device. For example, if the identification information of the terminal device is an S-TMSI, 32 least significant bits of the S-TMSI are used, and a frame check sequence of the 32 bit is used as the hash identifier.

In this implementation, a paging hyperframe of the CN paging message is a hyper system frame in which the first paging hyperframe and the second paging hyperframe coincide or overlap, and the paging hyperframe of the CN paging message includes the first PTW and the second PTW.

In this implementation, the first eDRX cycle is greater than or equal to the second eDRX cycle.

In a second implementation, the paging hyperframe is determined based on the least common multiple of the first eDRX cycle and the second eDRX cycle, or the paging hyperframe is determined based on a largest value in the first eDRX cycle and the second eDRX cycle. The second eDRX cycle may be configured by the core network.

In this implementation, the first eDRX cycle may be greater than 10.24 seconds, and the second eDRX cycle may be greater than 10.24 seconds.

For example, in this implementation, a hyper system frame number H-SFN of the paging hyperframe satisfies the following form:

$$H\text{-}SFN \bmod TX = (UE\_ID\_H \bmod T_X) \ (6)$$

Tx represents the least common multiple of the first eDRX cycle and the second eDRX cycle, or Tx represents the largest value in the first eDRX cycle and the second eDRX cycle. UE_ID_H is determined based on an identifier of the terminal device, and mod represents a modulo operation.

S405: The access network device sends scheduling information of the first paging message or scheduling information of the second paging message in a time window of the paging hyperframe.

S406: The terminal device monitors the scheduling information of the first paging message and the scheduling information of the second paging message in the time window of the paging hyperframe.

In this application, that the terminal device monitors scheduling information of a paging message may also mean that the terminal device monitors the paging message. Meanings of the two may be the same.

In this application, when the access network device determines to page the terminal device, the access network device sends the scheduling information of the first paging message or the scheduling information of the second paging message in the time window of the paging hyperframe. For example, for the first paging message (namely, the CN paging message), the access network device may receive the first paging message from the core network, to determine to page the terminal device, and the access network device sends the scheduling information of the first paging message in the time window of the paging hyperframe. For the second paging message (namely, the RAN paging message), when receiving data or signaling that needs to be sent to the terminal device, the access network device determines to page the terminal device, and the access network device sends the scheduling information of the second paging message in the time window of the paging hyperframe. The foregoing is merely an example, and there may be another case in which the terminal device needs to be paged via a paging message. Examples are not described herein one by one.

Correspondingly, the terminal device neither monitors the scheduling information of the first paging message in the first PTW of the paging hyperframe nor monitors the scheduling information of the second paging message in the second PTW of the paging hyperframe, but monitors the scheduling information of the first paging message and the scheduling information of the second paging message in the time window of the paging hyperframe.

This is because the access network device may schedule only one type of paging message in one paging hyperframe. To be specific, although the paging hyperframe includes the first PTW and the second PTW, in the time window of the paging hyperframe, the access network device may send only the scheduling information of the first paging message or the scheduling information of the second paging message in the time window.

For the terminal device, because the terminal device can neither determine whether there is a paging message for paging the terminal device, nor determine a type of the paging message, if the paging hyperframe includes the first PTW and the second PTW, the terminal device monitors the scheduling information of the first paging message and the scheduling information of the second paging message in the time window of the paging hyperframe.

In this application, how the access network device specifically schedules the paging message is not limited. For example, the scheduling information may be downlink control information (downlink control information, DCI) scrambled by using a paging radio network temporary identity (paging radio network temporary identity, P-RNTI). When the access network device determines to send the paging message, the access network device may send, on a PDCCH on a PO in the time window, the DCI scrambled by using the P-RNTI. The DCI is used for scheduling the paging message. When sending the DCI, the access network device further sends the paging message on a physical downlink shared channel (physical downlink shared channel, PDSCH) scheduled by using the DCI. A specific process is not described again.

Correspondingly, the terminal device monitors the DCI on the PO in the time window of the paging hyperframe. If the terminal device receives, on the PDCCH on the PO, the DCI scrambled by using the P-RNTI, the terminal device receives the paging message on the PDSCH scheduled by using the DCI. The terminal device may determine, based on specific content of the received paging message, whether the paging message is the first paging message or the second paging message.

The time window of the paging hyperframe further includes a paging frame. The scheduling information of the first paging message and the scheduling information of the second paging message are located in the paging frame of the time window, and the paging frame includes paging occasions of the scheduling information of the first paging message and the scheduling information of the second paging message. In other words, the paging occasions are located in the paging frame or start positions of the paging occasions are located in the paging frame. In this application, there may be a plurality of implementations of how the terminal device determines the time window in the paging hyperframe, and determines the paging frame and the paging occasion in the time window. The following separately describes the implementations.

Implementation 1

The time window is determined based on the first PTW and the second PTW. Specifically, a length of the time window is equal to a largest length in a length of the first PTW and a length of the second PTW. A start position of the time window in the paging hyperframe is equal to a start position of a PTW with a largest length in the first PTW and the second PTW in the paging hyperframe, and an end position of the time window in the paging hyperframe is equal to an end position of the PTW with the largest length in the first PTW and the second PTW in the paging hyperframe. If the length of the first PTW is equal to the length of the second PTW, the start position of the time window is equal to the start position of the first PTW. In other words, if the length of the first PTW is greater than or equal to the length of the second PTW, the start position of the time window in the paging hyperframe is determined based on the first eDRX cycle. Alternatively, if the length of the first PTW is less than the length of the second PTW, the start position of the time window in the paging hyperframe is determined based on the second eDRX cycle.

For example, as shown in (a) in FIG. 6, in the paging hyperframe, an SFN of a system frame in which the start position of the first PTW determined based on the first eDRX cycle is located is 512, and the length of the first PTW is 384 SFNs. In the paging hyperframe, an SFN of a system frame in which the start position of the second PTW determined based on the second eDRX cycle is located is 128, and the length of the second PTW is 128 SFNs. As shown in (b) in FIG. 6, because the length of the first PTW is greater than the length of the second PTW, in the paging hyperframe, the start position of the time window in which the terminal device actually performs monitoring is equal to the start position of the first PTW, an SFN of the start position of the time window is 512, and the length of the time window is 384 SFNs. The terminal device monitors the scheduling information of the first paging message and the scheduling information of the second paging message in the time window.

In Implementation 1, there are a plurality of implementations for determining the paging frame and the paging occasion in the time window. The following separately describes the implementations.

In a first implementation, the paging frame is determined based on a first parameter T1, and the first parameter T1 is determined based on at least one of a default DRX cycle, a first DRX cycle corresponding to the first paging message, and a second DRX cycle corresponding to the second paging message.

The default DRX cycle is from the system information broadcast by the access network device. For example, the access network device may send the default DRX cycle to the terminal device via a system information block 1 (system information block 1, SIB1). The first DRX cycle is allocated by the core network, or the core network may not allocate the first DRX cycle. The second DRX cycle is allocated by the access network, or the access network may not allocate the second DRX cycle.

For example, if the core network allocates the first DRX cycle, and the access network allocates the second DRX cycle, the first parameter T1 may be a smallest value in the default DRX cycle, the first DRX cycle, and the second DRX cycle. If the core network allocates the first DRX cycle, and the access network does not allocate the second DRX cycle, the first parameter T1 may be a smallest value in the default DRX cycle and the first DRX cycle. If the core network does not allocate the first DRX cycle, and the access network allocates the second DRX cycle, the first parameter T1 may be a smallest value in the default DRX cycle and the second DRX cycle. If the core network does not allocate the first DRX cycle, and the access network does not allocate the second DRX cycle, the first parameter T1 may be the default DRX cycle.

For example, a system frame corresponding to an SFN that satisfies the following formula and that is in the time window is the paging frame:

$$(SFN + PF\_offset) \bmod T1 = (T1 \operatorname{div} N1)*(UE\_ID \bmod N1) \quad (7)$$

T1 represents the first parameter. PF_offset is an offset used for determining the paging frame, and is configured by the access network device, for example, is carried in the SIB1 sent by the access network device. UE_ID is determined based on the identification information of the terminal device. For example, the identification information of the terminal device is a 5G S-TMSI of the terminal device. 10 least significant bits (in a non-eDRX mode) or 12 least significant bits (in an eDRX mode) of the 5G S-TMSI are used as UE_ID. div represents a division operation.

N1 in formula (7) is a total quantity of paging frames included in a paging periodicity T1, and N1 in formula (7) may be determined based on the first parameter T1. For example, a network side may indicate a relational expression between N1 and T1, and the terminal device may determine a specific value of N1 based on the relational expression. For example, the access network device indicates N1=T1/2, and the terminal device may determine the value of N1 based on a value of T1. For example, if T1=100, and the access network device indicates N1=T1/2, the terminal device may determine N1=100/2=50. In a possible implementation, the access network device may select a relational expression from a set {T1, T1/2, T1/4, T1/8, T1/16, T1/32, T1/64, T1/128, T1/256}, and indicate the relational expression to the terminal device. The access network device may indicate the relational expression between N1 and T1 in the SIB1.

For meanings of other parameters in formula (7), refer to descriptions of formula (6).

Further, an index of the paging occasion in the paging frame is determined based on a second parameter T2, and the second parameter T2 is determined based on at least one of the default DRX cycle and the first DRX cycle. Alternatively, the index of the paging occasion in the paging frame in the time window is equal to an index of the paging occasion in a paging frame in the first PTW, and the index of the paging occasion in the paging frame in the first PTW is determined based on the second parameter T2.

For example, if the core network allocates the first DRX cycle, the second parameter T2 may be a smallest value in the default DRX cycle and the first DRX cycle. If the core network does not allocate the first DRX cycle, the second parameter T2 may be the default DRX cycle.

For example, an index i_s of a paging occasion in a paging frame satisfies the following formula:

$$i\_s = floor(UE\_ID\_H/N2) \bmod Ns \ (8)$$

Ns represents a total quantity of paging occasions included in one paging frame. A specific value of Ns may be indicated by the access network device in the SIB1.

N2 in formula (8) is a total quantity of paging frames included in a paging periodicity T2, and N2 in formula (8) may be determined based on the second parameter T2. For example, the network side may indicate a relational expression between N2 and T2, and the terminal device may determine a specific value of N2 based on the relational expression. For example, the access network device indicates N2=T2/2, and the terminal device may determine the value of N2 based on a value of T2. In a possible implementation, the access network device may select a relational expression from a set {T2, T2/2, T2/4, T2/8, T2/16, T2/32, T2/64, T2/128, T2/256}, and indicate the relational expression to the terminal device. The access network device may indicate the relational expression between N2 and T2 in the SIB1.

For meanings of other parameters in formula (8), refer to descriptions of formula (6).

In a second implementation, the time window includes a preset position, and the preset position is determined based on the start position of the time window and a smallest length in the length of the first PTW and the length of the second PTW. For example, a length from the start position of the time window to the preset position is the smallest length in the length of the first PTW and the length of the second PTW.

In this implementation, the time window may be divided into two parts. A first part is from the start position of the time window to the preset position, and a second part is from the preset position to an end position of the time window. The end position of the time window is determined based on the start position of the time window and the length of the time window.

If the length from the start position of the time window to the preset position is the smallest length in the length of the first PTW and the length of the second PTW, the paging frame is determined based on a first parameter T1 in a period from the start position of the time window to the preset position, and the paging frame is determined based on a third parameter T3 in a period from the preset position to the end position of the time window.

The third parameter T3 is determined based on at least one of a DRX cycle corresponding to a PTW with a smallest length in the first PTW and the second PTW and a default DRX cycle. For example, if a length of a first paging time window is greater than or equal to a length of a second paging time window, the third parameter T3 is determined based on at least one of the default DRX cycle and the first DRX cycle. For example, the third parameter T3 is a smallest value in the default DRX cycle and the first DRX cycle. If the core network does not allocate the first DRX cycle, the third parameter T3 may be the default DRX cycle. If the length of the first paging time window is less than the length of the second paging time window, the third parameter T3 is determined based on at least one of the default DRX cycle and the second DRX cycle. For example, the third parameter T3 is a smallest value in the default DRX cycle and the second DRX cycle. If the access network does not allocate the second DRX cycle, the third parameter T3 may be the default DRX cycle.

For example, if the length from the start position of the time window to the preset position is the smallest length in the length of the first PTW and the length of the second PTW, in the period from the start position of the time window to the preset position, a system frame corresponding to an SFN that is in the time window and that satisfies the following formula is a paging frame:

$$(\text{SFN}+\text{PF\_offset}) \bmod \text{T1}=(\text{T1 div N1})*(\text{UE\_ID} \bmod \text{N1}) \quad (9)$$

T1 represents the first parameter. For meanings of other parameters in formula (9), refer to descriptions of formula (6) or formula (7).

If the length from the start position of the time window to the preset position is the smallest length in the length of the first PTW and the length of the second PTW, in the period from the preset position of the time window to the end position of the time window, a system frame corresponding to an SFN that is in the time window and that satisfies the following formula is a paging frame:

$$(\text{SFN}+\text{PF\_offset}) \bmod \text{T3}=(\text{T3 div N3})*(\text{UE\_ID} \bmod \text{N3}) \quad (10)$$

T3 represents the third parameter. N3 in formula (10) is a total quantity of paging frames included in a paging periodicity T3, and N3 in formula (10) may be determined based on the third parameter T3. For example, the network side may indicate a relational expression between N3 and T3, and the terminal device may determine a specific value of N3 based on the relational expression. In a possible implementation, the access network device may select a relational expression from a set {T3, T3/2, T3/4, T3/8, T3/16, T3/32, T3/64, T3/128, T3/256}, and indicate the relational expression to the terminal device. The access network device may indicate the relational expression between N3 and T3 in the SIB1. For meanings of other parameters in formula (10), refer to descriptions of formula (6) or formula (7).

Further, in the paging frame in the period from the start position of the time window to the preset position, an index of a paging occasion in the paging frame is determined based on a second parameter T2. In the paging frame in the period from the preset position of the time window to the end position of the time window, an index of a paging occasion in the paging frame is determined based on the third parameter T3.

The second parameter T2 is determined based om at least one of the default DRX cycle and the first DRX cycle. For example, if the core network allocates the first DRX cycle, the second parameter T2 may be a smallest value in the default DRX cycle and the first DRX cycle. If the core network does not allocate the first DRX cycle, the second parameter T2 may be the default DRX cycle.

For example, an index i_s of a paging occasion in a paging frame satisfies the following formula:

$$\text{i\_s}=\text{floor}(\text{UE\_ID}/\text{N}) \bmod \text{Ns} \quad (11)$$

Ns represents a total quantity of paging occasions included in one paging frame, and a specific value of Ns may be configured by the access network device, for example, indicated by the access network device in the SIB1. N is a total quantity of paging frames included in a paging periodicity T. For a manner of determining N2, refer to descriptions of formula (8).

If the paging frame in which the paging occasion is located is in the period from the start position of the time window to the preset position, N=N2, and for a manner of determining N2, refer to the descriptions of formula (8).

If the paging frame in which the paging occasion is located is in the period from the preset position of the time window to the end position of the time window, N=N3, and for a manner of determining N3, refer to descriptions of formula (10).

For meanings of other parameters in formula (11), refer to descriptions of formula (6).

Implementation 2

The time window is determined based on the first PTW. Specifically, the length of the time window is equal to a length of the first PTW. A start position of the time window in the paging hyperframe is equal to the start position of the first PTW in the paging hyperframe, and an end position of the time window in the paging hyperframe is equal to an end position of the first PTW in the paging hyperframe. In other words, the start position of the time window in the paging hyperframe is determined based on the first eDRX cycle.

In Implementation 2, the paging frame in the time window is determined based on a first parameter T1. For specific content of the first parameter T1, refer to the foregoing descriptions.

For example, a system frame corresponding to an SFN that satisfies the foregoing formula (7) and that is in the time window is the paging frame.

Further, an index of the paging occasion in the paging frame is determined based on a second parameter T2. For specific content of the second parameter T2, refer to the foregoing descriptions.

For example, an index i_s of a paging occasion in a paging frame satisfies the foregoing formula (8).

Implementation 3

The time window is determined based on the first PTW. Specifically, a length of the time window is equal to a largest length in a length of the first PTW and a length of the second PTW. A start position of the time window in the paging hyperframe is equal to the start position of the first PTW in the paging hyperframe. In other words, the start position of the time window in the paging hyperframe is determined based on the first eDRX cycle.

In Implementation 3, the time window includes a preset position, and the preset position is determined based on the start position of the time window and a smallest length in the length of the first PTW and the length of the second PTW. For example, a length from the start position of the time window to the preset position is the smallest length in the length of the first PTW and the length of the second PTW.

If the length from the start position of the time window to the preset position is the smallest length in the length of the first PTW and the length of the second PTW, the paging frame is determined based on a first parameter T1 in a period from the start position of the time window to the preset position, and the paging frame is determined based on a third parameter T3 in a period from the preset position to an end position of the time window.

For example, in the period from the start position of the time window to the preset position, a system frame corresponding to an SFN that satisfies the foregoing formula (9) and that is in the time window is the paging frame.

In the period from the preset position of the time window to the end position of the time window, a system frame corresponding to an SFN that satisfies the foregoing formula (10) and that is in the time window is the paging frame.

Further, if the length from the start position of the time window to the preset position is the smallest length in the length of the first PTW and the length of the second PTW, in the paging frame in the period from the start position of the time window to the preset position, an index of a paging occasion in the paging frame is determined based on the second parameter T2, and in the paging frame in the period from the preset position of the time window to the end position of the time window, an index of a paging occasion in the paging frame is determined based on the third parameter T3.

For example, if the length from the start position of the time window to the preset position is the smallest length in the length of the first PTW and the length of the second PTW, in the period from the start position of the time window to the preset position, the index of the paging occasion in the paging frame satisfies the foregoing formula (11), and N in formula (11) is equal to N2. For a manner of determining N2, refer to the descriptions of formula (8).

In the period from the preset position of the time window to the end position of the time window, the index of the paging occasion in the paging frame satisfies the foregoing formula (11), and N in formula (11) is equal to N3. For a manner of determining N3, refer to the descriptions of formula (10).

According to the method provided in this application, the terminal device may simultaneously monitor, in the time window of the paging hyperframe, the first paging message initiated by the CN and the second paging message initiated by a RAN, to reduce a quantity of times the terminal device needs to wake up, thereby reducing power consumption of the terminal device and increasing standby time of the terminal device.

In the foregoing embodiments provided in this application, the method provided in embodiments of this application is described from a perspective of interaction between devices. To implement functions in the method provided in embodiments of this application, the access network device or the terminal device may include a hardware structure and/or a software module, and implement the functions in the form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In this embodiment of this application, module division is an example, and is merely a logical function division. During actual implementation, another division manner may be used. In addition, functional modules in embodiments of this application may be integrated into one processor, or may exist alone physically, or two or more modules may be integrated into one module. The integrated module may be implemented in the form of hardware, or may be implemented in the form of a software functional module.

Same as the foregoing concept, as shown in FIG. 7, an embodiment of this application further provides a communication apparatus 700, configured to implement a function of the access network device or the terminal device in the foregoing method. For example, the apparatus may be a software module or a chip system. In this embodiment of this application, the chip system may include a chip, or may include a chip and another discrete component. The communication apparatus 700 may include a processing unit 701 and a communication unit 702.

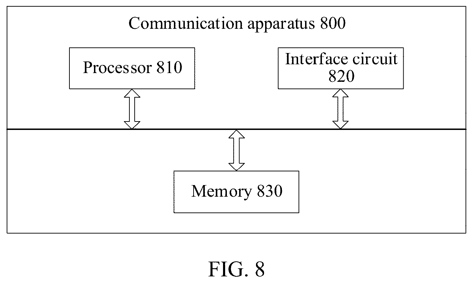

The following describes in detail communication apparatuses provided in this embodiment of this application with reference to FIG. 7 and FIG. 8. It should be understood that descriptions of apparatus embodiments correspond to the descriptions of the method embodiments. Therefore, for content that is not described in detail, refer to the method embodiments. For brevity, details are not described herein again.

In this embodiment of this application, the communication unit may also be referred to as a transceiver unit, and may include a sending unit and/or a receiving unit, which are respectively configured to perform sending and receiving steps of the access network device or the terminal device in the foregoing method embodiments. Optionally, a component that is in the communication unit 702 and that is configured to implement a receiving function may be considered as a receiving unit, and a component that is in the communication unit 702 and that is configured to implement a sending function may be considered as a sending unit. In other words, the communication unit 702 includes the receiving unit and the sending unit. The communication unit sometimes may also be referred to as a transceiver machine, a transceiver, a transceiver circuit, or the like. The receiving unit sometimes may also be referred to as a receiver machine, a receiver, a receiver circuit, or the like. The sending unit sometimes may also be referred to as a transmitter machine, a transmitter, a transmit circuit, or the like. The processing unit may also be referred to as a processor, a processing board, a processing module, a processing apparatus, or the like.

When the communication apparatus 700 performs a function of the terminal device in this embodiment of this application,

the processing unit is configured to determine a paging hyperframe, where the paging hyperframe is determined based on a first extended discontinuous reception cycle configured by a core network, the paging hyperframe is determined based on a least common multiple of the first extended discontinuous reception cycle and a second extended discontinuous reception cycle configured by an access network, or the paging hyperframe is determined based on a largest value in the first extended discontinuous reception cycle and the second extended discontinuous reception cycle, and the second extended discontinuous reception cycle is greater than 10.24 seconds; and
the communication unit is configured to monitor scheduling information of a first paging message and scheduling information of a second paging message in a time window of the paging hyperframe, where
the time window is determined based on a first paging time window and a second paging time window, or the time window is determined based on the first paging time window; a start position of the first paging time window is determined based on the first extended discontinuous reception cycle, and a start position of the second paging time window is determined based on the second extended discontinuous reception cycle; and the first paging message is initiated by the core network, and the second paging message is initiated by the access network.

When the communication apparatus 700 performs a function of the access network device in this embodiment of this application,

the processing unit is configured to determine a paging hyperframe, where the paging hyperframe is determined based on a first extended discontinuous reception cycle configured by a core network, the paging hyperframe is determined based on a least common multiple of the first extended discontinuous reception cycle and a second extended discontinuous reception cycle configured by an access network, or the paging hyperframe is determined based on a largest value in the first extended discontinuous reception cycle and the second extended discontinuous reception cycle, and the second extended discontinuous reception cycle is greater than 10.24 seconds; and
a communication unit is configured to send scheduling information of a first paging message or scheduling information of a second paging message in a time window of the paging hyperframe, where
the time window is determined based on a first paging time window and a second paging time window, or the time window is determined based on the first paging time window; a start position of the first paging time window is determined based on the first extended discontinuous reception cycle, and a start position of the second paging time window is determined based on the second extended discontinuous reception cycle; and the first paging message is initiated by the core network, and the second paging message is initiated by the access network.

The foregoing is merely an example. The processing unit 701 and the communication unit 702 may further perform other functions. For more detailed descriptions, refer to related descriptions of the method embodiment shown in FIG. 4. Details are not described herein again.

FIG. 8 is a diagram of a structure of a communication apparatus according to an embodiment of this application. The communication apparatus shown in FIG. 8 may be an implementation of a hardware circuit of the communication apparatus shown in FIG. 8. The communication apparatus is applicable to the foregoing flowchart, and performs the function of the terminal device or the access network device in the foregoing method embodiments. For ease of description, FIG. 8 shows only main components of the communication apparatus.

As shown in FIG. 8, the communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to store instructions executed by the processor 810, store input data for the processor 810 to run instructions, or store data generated after the processor 810 runs instructions.

When the communication apparatus 800 is configured to implement the method shown in FIG. 4, the processor 810 is configured to implement a function of the processing unit 701, and the interface circuit 820 is configured to implement a function of the communication unit 702.

When the communication apparatus is a chip used in a terminal device, the chip in the terminal device implements the function of the terminal device in the foregoing method embodiments. The chip in the terminal device receives information from another module (for example, a radio frequency module or an antenna) in the terminal device, where the information is sent by the access network device to the terminal device. Alternatively, the chip in the terminal device sends information to another module (for example, a radio frequency module or an antenna) in the terminal device, where the information is sent by the terminal device to the access network device.

When the communication apparatus is a chip used in the access network device, the chip in the access network device implements the function of the access network device in the foregoing method embodiments. The chip in the access network device receives information from another module (for example, a radio frequency module or an antenna) in the access network device, where the information is sent by the terminal device to the access network device. Alternatively, the chip in the access network device sends information to another module (for example, a radio frequency module or an antenna) in the access network device, where the information is sent by the access network device to the terminal device.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

The memory in embodiments of this application may be a random access memory (Random Access Memory, RAM), a flash memory, a read-only memory (Read-Only Memory, ROM), or a programmable read-only memory (Programmable ROM, PROM), an erasable programmable read-only memory (Erasable PROM, EPROM), an electrically erasable programmable read-only memory (Electrically EPROM, EEPROM), a register, a hard disk drive, a removable hard disk, a CD-ROM, or any other form of storage medium well known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in the access network device or the terminal device. Certainly, the processor and the storage medium may exist in the access network device or the terminal device as discrete components.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. In this case, provided that the modifications and variations made to this application fall within the scope of the claims of this application and equivalent techniques thereof, this application is also intended to cover such modifications and variations.

**Claims**

**1.** A communication method, comprising:

determining a paging hyperframe, wherein the paging hyperframe is determined based on a first extended discontinuous reception cycle configured by a core network, the paging hyperframe is determined based on a least common multiple of the first extended discontinuous reception cycle and a second extended discontinuous reception cycle configured by an access network, or the paging hyperframe is determined based on a largest value in the first extended discontinuous reception cycle and the second extended discontinuous reception cycle, and the second extended discontinuous reception cycle is greater than 10.24 seconds; and

monitoring scheduling information of a first paging message and scheduling information of a second paging message in a time window of the paging hyperframe, wherein

the time window is determined based on a first paging time window and a second paging time window, or the time window is determined based on the first paging time window; a start position of the first paging time window is determined based on the first extended discontinuous reception cycle, and a start position of the second paging time window is determined based on the second extended discontinuous reception cycle; and the first paging message is initiated by the core network, and the second paging message is initiated by the access network.

2. The method according to claim 1, wherein that the time window is determined based on the first paging time window and the second paging time window comprises:

a start position of the time window in the paging hyperframe is determined based on the first extended discontinuous reception cycle if a length of the first paging time window is greater than or equal to a length of the second paging time window; or

the start position of the time window in the paging hyperframe is determined based on the second extended discontinuous reception cycle if the length of the first paging time window is less than the length of the second paging time window.

3. The method according to claim 2, wherein a length of the time window is equal to a largest length in the length of the first paging time window and the length of the second paging time window.

4. The method according to claim 1, wherein that the time window is determined based on the first paging time window comprises:

a start position of the time window in the paging hyperframe is equal to the start position of the first paging time window in the paging hyperframe.

5. The method according to claim 4, wherein a length of the time window is equal to a length of the first paging time window.

6. The method according to claim 4, wherein a length of the time window is equal to a largest length in a length of the first paging time window and a length of the second paging time window.

7. The method according to any one of claims 1 to 6, wherein the scheduling information of the first paging message and the scheduling information of the second paging message are located in a paging frame of the time window; and the paging frame is determined based on a first parameter T1, the first parameter T1 is determined based on at least one of a default discontinuous reception cycle, a first discontinuous reception cycle corresponding to the first paging message, and a second discontinuous reception cycle corresponding to the second paging message, and the default discontinuous reception cycle is from system information broadcast by an access network device.

8. The method according to claim 7, wherein the paging frame comprises paging occasions of the scheduling information of the first paging message and the scheduling information of the second paging message, and indexes of the paging occasions in the paging frame are determined based on a second parameter T2, wherein the second parameter T2 is determined based on at least one of the default discontinuous reception cycle and the first discontinuous reception cycle.

9. The method according to any one of claims 1 to 6, wherein the scheduling information of the first paging message and the scheduling information of the second paging message are located in a paging frame of the time window;

the paging frame is determined based on a first parameter T1 in a period from a start position of the time window to a preset position, wherein the first parameter T1 is determined based on at least one of a default discontinuous reception cycle, a first discontinuous reception cycle corresponding to the first paging message, and a second discontinuous reception cycle corresponding to the second paging message, and the preset position is determined based on the start position of the time window and a smallest length in the length of the first paging time window and the length of the second paging time window; and

the paging frame is determined based on a third parameter T3 in a period from the preset position to an end position of the time window, wherein the third parameter T3 is determined based on at least one of the default discontinuous reception cycle and the first discontinuous reception cycle if the length of the first paging time window is greater than or equal to the length of the second paging time window, or the third parameter T3 is determined based on at least one of the default discontinuous reception cycle and the second discontinuous reception cycle if the length of the first paging time window is less than the length of the second paging time window; and the end position of the time window is determined based on the start position of the time window and the length of the time window.

10. The method according to claim 9, wherein the paging frame comprises paging occasions of the scheduling information of the first paging message and the scheduling information of the second paging message, and indexes of the paging occasions in the paging frame are determined based on a second parameter T2, wherein the second parameter T2 is determined based on at least one of the default discontinuous reception cycle and the first discontinuous reception cycle; or

the indexes of the paging occasions in the paging frame are determined based on the third parameter T3.

11. The method according to any one of claims 1 to 10, wherein when the paging hyperframe is determined based on the least common multiple of the first extended discontinuous reception cycle and the second extended discontinuous reception cycle, or the paging hyperframe is determined based on the largest value in the first extended discontinuous reception cycle and the second extended discontinuous reception cycle, a hyper system frame number H-SFN of the paging hyperframe satisfies the following form:

$$\text{H-SFN mod TX}=(\text{UE\_ID\_H mod TX}),$$

wherein

TX represents the least common multiple of the first extended discontinuous reception cycle and the second extended discontinuous reception cycle or the largest value in the first extended discontinuous reception cycle and the second extended discontinuous reception cycle, UE_ID_H is determined based on an identifier of the terminal device, and mod represents a modulo operation.

12. A communication method, comprising:

determining a paging hyperframe, wherein the paging hyperframe is determined based on a least common multiple of the first extended discontinuous reception cycle and a second extended discontinuous reception cycle configured by an access network, or the paging hyperframe is determined based on a largest value in the first extended discontinuous reception cycle and the second extended discontinuous reception cycle, and the second extended discontinuous reception cycle is greater than 10.24 seconds; and

sending scheduling information of a first paging message or scheduling information of a second paging message in a time window of the paging hyperframe, wherein

the time window is determined based on a first paging time window and a second paging time window, or the time window is determined based on the first paging time window; a start position of the first paging time window is determined based on the first extended discontinuous reception cycle, and a start position of the second paging time window is determined based on the second extended discontinuous reception cycle; and the first paging message is initiated by the core network, and the second paging message is initiated by the access network.

13. The method according to claim 12, wherein that the time window is determined based on the first paging time window and the second paging time window comprises:

a start position of the time window in the paging hyperframe is determined based on the first extended discontinuous reception cycle if a length of the first paging time window is greater than or equal to a length of the second paging time window; or

the start position of the time window in the paging hyperframe is determined based on the second extended discontinuous reception cycle if the length of the first paging time window is less than the length of the second paging time window.

14. The method according to claim 13, wherein a length of the time window is equal to a largest length in the length of the first paging time window and the length of the second paging time window.

15. The method according to claim 12, wherein that the time window is determined based on the first paging time window comprises:
a start position of the time window in the paging hyperframe is equal to the start position of the first paging time window in the paging hyperframe.

16. The method according to claim 15, wherein a length of the time window is equal to a length of the first paging time window.

17. The method according to claim 15, wherein a length of the time window is equal to a largest length in a length of the first paging time window and a length of the second paging time window.

18. The method according to any one of claims 12 to 17, wherein the scheduling information of the first paging message and the scheduling information of the second paging message are located in a paging frame of the time window; and the paging frame is determined based on a first parameter T1, the first parameter T1 is determined based on at least one of a default discontinuous reception cycle, a first discontinuous reception cycle corresponding to the first paging message, and a second discontinuous reception cycle corresponding to the second paging message, and the default discontinuous reception cycle is from system information broadcast by an access network device.

19. The method according to claim 18, wherein the paging frame comprises paging occasions of the scheduling information of the first paging message and the scheduling information of the second paging message, and indexes of the paging occasions in the paging frame are determined based on a second parameter T2, wherein the second parameter T2 is determined based on at least one of the default discontinuous reception cycle and the first discontinuous reception cycle.

20. The method according to any one of claims 12 to 19, wherein the scheduling information of the first paging message and the scheduling information of the second paging message are located in the paging frame of the time window;

the paging frame is determined based on the first parameter T1 in a period from a start position of the time window to a preset position, wherein the first parameter T1 is determined based on at least one of the default discontinuous reception cycle, the first discontinuous reception cycle corresponding to the first paging message, and the second discontinuous reception cycle corresponding to the second paging message, and the preset position is determined based on the start position of the time window and a smallest length in the length of the first paging time window and the length of the second paging time window; and
the paging frame is determined based on a third parameter T3 in a period from the preset position to an end position of the time window, wherein the third parameter T3 is determined based on at least one of the default discontinuous reception cycle and the first discontinuous reception cycle if the length of the first paging time window is greater than or equal to the length of the second paging time window, or the third parameter T3 is determined based on at least one of the default discontinuous reception cycle and the second discontinuous reception cycle if the length of the first paging time window is less than the length of the second paging time window; and the end position of the time window is determined based on the start position of the time window and the length of the time window.

21. The method according to claim 20, wherein the paging frame comprises the paging occasions of the scheduling information of the first paging message and the scheduling information of the second paging message, and the indexes of the paging occasions in the paging frame are determined based on the second parameter T2, wherein the second parameter T2 is determined based on at least one of the default discontinuous reception cycle and the first discontinuous reception cycle; or
the indexes of the paging occasions in the paging frame are determined based on the third parameter T3.

22. The method according to any one of claims 12 to 21, wherein when the paging hyperframe is determined based on the least common multiple of the first extended discontinuous reception cycle and the second extended discontinuous reception cycle, or the paging hyperframe is determined based on the largest value in the first extended discontinuous reception cycle and the second extended discontinuous reception cycle, a hyper system frame number H-SFN of the paging hyperframe satisfies the following form:

$$\text{H-SFN mod TX} = (\text{UE\_ID\_H mod TX}),$$

wherein
TX represents the least common multiple of the first extended discontinuous reception cycle and the second extended discontinuous reception cycle or the largest value in the first extended discontinuous reception cycle and the second extended discontinuous reception cycle, UE\_ID\_H is determined based on an identifier of the terminal device, and mod represents a modulo operation.

23. A communication apparatus, comprising:

a processing unit, configured to determine a paging hyperframe, wherein the paging hyperframe is determined based on a first extended discontinuous reception cycle configured by a core network, the paging hyperframe is determined based on a least common multiple of the first extended discontinuous reception cycle and a second extended discontinuous reception cycle configured by an access network, or the paging hyperframe is determined based on a largest value in the first extended discontinuous reception cycle and the second extended discontinuous reception cycle, and the second extended discontinuous reception cycle is greater than 10.24 seconds; and
a communication unit, configured to monitor scheduling information of a first paging message and scheduling information of a second paging message in a time window of the paging hyperframe, wherein
the time window is determined based on a first paging time window and a second paging time window, or the time window is determined based on the first paging time window; a start position of the first paging time window is determined based on the first extended discontinuous reception cycle, and a start position of the second paging time window is determined based on the second extended discontinuous reception cycle; and the first paging message is initiated by the core network, and the second paging message is initiated by the access network.

24. The apparatus according to claim 23, wherein that the time window is determined based on the first paging time window and the second paging time window comprises:

a start position of the time window in the paging hyperframe is determined based on the first extended discontinuous reception cycle if a length of the first paging time window is greater than or equal to a length of the second paging time window; or
the start position of the time window in the paging hyperframe is determined based on the second extended discontinuous reception cycle if the length of the first paging time window is less than the length of the second paging time window.

25. The apparatus according to claim 24, wherein a length of the time window is equal to a largest length in the length of the first paging time window and the length of the second paging time window.

26. The apparatus according to claim 23, wherein that the time window is determined based on the first paging time window comprises:
a start position of the time window in the paging hyperframe is equal to the start position of the first paging time window in the paging hyperframe.

27. The apparatus according to claim 26, wherein a length of the time window is equal to a length of the first paging time window.

28. The apparatus according to claim 26, wherein a length of the time window is equal to a largest length in a length of the first paging time window and a length of the second paging time window.

29. The apparatus according to any one of claims 23 to 28, wherein the scheduling information of the first paging message and the scheduling information of the second paging message are located in a paging frame of the time window; and the paging frame is determined based on a first parameter T1, the first parameter T1 is determined based on at least one of a default discontinuous reception cycle, a first discontinuous reception cycle corresponding to the first paging message, and a second discontinuous reception cycle corresponding to the second paging message, and the default discontinuous reception cycle is from system information broadcast by an access network device.

30. The apparatus according to claim 29, wherein the paging frame comprises paging occasions of the scheduling information of the first paging message and the scheduling information of the second paging message, and indexes of the paging occasions in the paging frame are determined based on a second parameter T2, wherein the second parameter T2 is determined based on at least one of the default discontinuous reception cycle and the first discontinuous reception cycle.

31. The apparatus according to any one of claims 23 to 28, wherein the scheduling information of the first paging message and the scheduling information of the second paging message are located in a paging frame of the time window;

the paging frame is determined based on a first parameter T1 in a period from a start position of the time window to a preset position, wherein the first parameter T1 is determined based on at least one of a default discontinuous reception cycle, a first discontinuous reception cycle corresponding to the first paging message, and a second discontinuous reception cycle corresponding to the second paging message, and the preset position is determined based on the start position of the time window and a smallest length in the length of the first paging time window and the length of the second paging time window; and

the paging frame is determined based on a third parameter T3 in a period from the preset position to an end position of the time window, wherein the third parameter T3 is determined based on at least one of the default discontinuous reception cycle and the first discontinuous reception cycle if the length of the first paging time window is greater than or equal to the length of the second paging time window, or the third parameter T3 is determined based on at least one of the default discontinuous reception cycle and the second discontinuous reception cycle if the length of the first paging time window is less than the length of the second paging time window; and the end position of the time window is determined based on the start position of the time window and the length of the time window.

32. The apparatus according to claim 31, wherein the paging frame comprises paging occasions of the scheduling information of the first paging message and the scheduling information of the second paging message, and indexes of the paging occasions in the paging frame are determined based on a second parameter T2, wherein the second parameter T2 is determined based on at least one of the default discontinuous reception cycle and the first discontinuous reception cycle; or

the indexes of the paging occasions in the paging frame are determined based on the third parameter T3.

33. The apparatus according to any one of claims 23 to 32, wherein when the paging hyperframe is determined based on the least common multiple of the first extended discontinuous reception cycle and the second extended discontinuous reception cycle, or the paging hyperframe is determined based on the largest value in the first extended discontinuous reception cycle and the second extended discontinuous reception cycle, a hyper system frame number H-SFN of the paging hyperframe satisfies the following form:

$$H\text{-}SFN \bmod TX = (UE\_ID\_H \bmod TX),$$

wherein

TX represents the least common multiple of the first extended discontinuous reception cycle and the second extended discontinuous reception cycle or the largest value in the first extended discontinuous reception cycle and the second extended discontinuous reception cycle, UE_ID_H is determined based on an identifier of the terminal device, and mod represents a modulo operation.

34. A communication apparatus, comprising:

a processing unit, configured to determine a paging hyperframe, wherein the paging hyperframe is determined based on a least common multiple of the first extended discontinuous reception cycle and a second extended discontinuous reception cycle configured by an access network, or the paging hyperframe is determined based on a largest value in the first extended discontinuous reception cycle and the second extended discontinuous reception cycle, and the second extended discontinuous reception cycle is greater than 10.24 seconds; and

a communication unit, configured to send scheduling information of a first paging message or scheduling information of a second paging message in a time window of the paging hyperframe, wherein

the time window is determined based on a first paging time window and a second paging time window, or the time window is determined based on the first paging time window; a start position of the first paging time window is determined based on the first extended discontinuous reception cycle, and a start position of the second paging time window is determined based on the second extended discontinuous reception cycle; and the first paging message is initiated by the core network, and the second paging message is initiated by the access network.

35. The apparatus according to claim 34, wherein that the time window is determined based on the first paging time window and the second paging time window comprises:

   a start position of the time window in the paging hyperframe is determined based on the first extended discontinuous reception cycle if a length of the first paging time window is greater than or equal to a length of the second paging time window; or
   the start position of the time window in the paging hyperframe is determined based on the second extended discontinuous reception cycle if the length of the first paging time window is less than the length of the second paging time window.

36. The apparatus according to claim 35, wherein a length of the time window is equal to a largest length in the length of the first paging time window and the length of the second paging time window.

37. The apparatus according to claim 34, wherein that the time window is determined based on the first paging time window comprises:
   a start position of the time window in the paging hyperframe is equal to the start position of the first paging time window in the paging hyperframe.

38. The apparatus according to claim 37, wherein a length of the time window is equal to a length of the first paging time window.

39. The apparatus according to claim 37, wherein a length of the time window is equal to a largest length in a length of the first paging time window and a length of the second paging time window.

40. The apparatus according to any one of claims 34 to 39, wherein the scheduling information of the first paging message and the scheduling information of the second paging message are located in a paging frame of the time window; and the paging frame is determined based on a first parameter T1, the first parameter T1 is determined based on at least one of a default discontinuous reception cycle, a first discontinuous reception cycle corresponding to the first paging message, and a second discontinuous reception cycle corresponding to the second paging message, and the default discontinuous reception cycle is from system information broadcast by an access network device.

41. The apparatus according to claim 40, wherein the paging frame comprises paging occasions of the scheduling information of the first paging message and the scheduling information of the second paging message, and indexes of the paging occasions in the paging frame are determined based on a second parameter T2, wherein the second parameter T2 is determined based on at least one of the default discontinuous reception cycle and the first discontinuous reception cycle.

42. The apparatus according to any one of claims 34 to 41, wherein the scheduling information of the first paging message and the scheduling information of the second paging message are located in a paging frame of the time window;

   the paging frame is determined based on the first parameter T1 in a period from a start position of the time window to a preset position, wherein the first parameter T1 is determined based on at least one of the default discontinuous reception cycle, the first discontinuous reception cycle corresponding to the first paging message, and the second discontinuous reception cycle corresponding to the second paging message, and the preset position is determined based on the start position of the time window and a smallest length in the length of the first paging time window and the length of the second paging time window; and
   the paging frame is determined based on a third parameter T3 in a period from the preset position to an end position of the time window, wherein the third parameter T3 is determined based on at least one of the default discontinuous reception cycle and the first discontinuous reception cycle if the length of the first paging time window is greater than or equal to the length of the second paging time window, or the third parameter T3 is determined based on at least one of the default discontinuous reception cycle and the second discontinuous reception cycle if the length of the first paging time window is less than the length of the second paging time window; and the end position of the time window is determined based on the start position of the time window and the length of the time window.

43. The apparatus according to claim 42, wherein the paging frame comprises the paging occasions of the scheduling information of the first paging message and the scheduling information of the second paging message, and the indexes of the paging occasions in the paging frame are determined based on a second parameter T2, wherein the second parameter T2 is determined based on at least one of the default discontinuous reception cycle and the first discontinuous reception cycle; or

the indexes of the paging occasions in the paging frame are determined based on the third parameter T3.

44. The apparatus according to any one of claims 34 to 43, wherein when the paging hyperframe is determined based on the least common multiple of the first extended discontinuous reception cycle and the second extended discontinuous reception cycle, or the paging hyperframe is determined based on the largest value in the first extended discontinuous reception cycle and the second extended discontinuous reception cycle, a hyper system frame number H-SFN of the paging hyperframe satisfies the following form:

$$\text{H-SFN mod TX} = (\text{UE\_ID\_H mod TX}),$$

wherein

TX represents the least common multiple of the first extended discontinuous reception cycle and the second extended discontinuous reception cycle or the largest value in the first extended discontinuous reception cycle and the second extended discontinuous reception cycle, UE\_ID\_H is determined based on an identifier of the terminal device, and mod represents a modulo operation.

45. A communication apparatus, comprising a processor and a memory, wherein

the processor is configured to execute a computer program or instructions stored in the memory, and when the processor executes the computer program or instructions, the method according to any one of claims 1 to 22 is performed.

46. A chip, comprising a processor, wherein the processor is coupled to a memory and is configured to execute a computer program or instructions stored in the memory, and when the processor executes the computer program or instructions, the method according to any one of claims 1 to 22 is performed.

47. A computer-readable storage medium, storing instructions, wherein when the instructions are run on a computer, the computer is enabled to perform the method according to any one of claims 1 to 22.

48. A computer program product, storing computer-readable instructions, wherein when a communication apparatus reads and executes the computer-readable instructions, the communication apparatus is enabled to perform the method according to any one of claims 1 to 22.

FIG. 1

FIG. 2

FIG. 3

```
┌─────────────────┐                    ┌─────────────────┐
│    Terminal     │                    │ Access network  │
│     device      │                    │     device      │
└─────────────────┘                    └─────────────────┘
        │                      ┌──────────────────────────┐
        │                      │ Optionally, S401: The access │
        │                      │  network device sends first  │
        │                      │ configuration information to │
        │                      │    the terminal device       │
        │                      └──────────────────────────┘
        │   First configuration information
        │◄─────────────────────────────────
        │                      ┌──────────────────────────┐
        │                      │ Optionally, S402: The access │
        │                      │ network device sends second  │
        │                      │ configuration information to │
        │                      │    the terminal device       │
        │                      └──────────────────────────┘
        │   Second configuration information
        │◄─────────────────────────────────
        │                      ┌──────────────────────────┐
        │                      │  S403: The access network    │
        │                      │ device determines a paging   │
        │                      │        hyperframe            │
        │                      └──────────────────────────┘
┌──────────────────┐
│ S404: The terminal │
│ device determines a │
│  paging hyperframe  │
└──────────────────┘
        │                      ┌──────────────────────────┐
        │                      │ S405: The access network device │
        │                      │ sends scheduling information of a │
        │                      │ first paging message or scheduling │
        │                      │  information of a second paging   │
        │                      │ message in a time window of the   │
        │                      │        paging hyperframe          │
        │                      └──────────────────────────┘
        │   Scheduling information of the first
        │   paging message or scheduling
        │   information of the second paging
        │   message
        │◄─────────────────────────────────
┌──────────────────────────────┐
│ S406: The terminal device monitors │
│  the scheduling information of the  │
│    first paging message and the     │
│ scheduling information of the second │
│ paging message in the time window   │
│    of the paging hyperframe         │
└──────────────────────────────┘
```

FIG. 4

First eDRX cycle

Second eDRX cycle

Time

H-SFN | 0 | 1 | 2 | 3 | 4 | 5 | 6 | 7 | 8 | 9 | 10 | 11 | 12 | 13 |

First PTW    Second PTW

FIG. 5

Second PTW

First PTW

0    128    256    512    768    896    SFN

(a)

Time window

0    256    512    768    896    SFN

(b)

FIG. 6

700

Processing unit  701

Communication unit  702

FIG. 7

Communication apparatus 800

Processor 810

Interface circuit 820

Memory 830

FIG. 8

## INTERNATIONAL SEARCH REPORT

| International application No. |
| --- |
| **PCT/CN2024/074608** |

| A. | CLASSIFICATION OF SUBJECT MATTER |
| --- | --- |

H04W 52/02(2009.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, WPABS, ENTXT, CNKI, 3GPP: 寻呼, 寻呼超帧, 超级系统帧号, 扩展非连续接收, 最小公倍, 最大值, 最长, 周期, 调度, 时间窗, 核心网, 接入网, 起始位置, paging, PH, H-SFN, eDRX, LCM, lowest common multiple, maximum, longest, period, RNTI, DCI, PDCCH, PDSCH, PTW, CN, RAN, start

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 112788618 A (DATANG MOBILE COMMUNICATIONS EQUIPMENT CO., LTD.) 11 May 2021 (2021-05-11)<br>  description, paragraphs [0132]-[0244] and [0297]-[0367] | 1-48 |
| Y | WO 2022141080 A1 (GUANGDONG OPPO MOBILE TELECOMMUNICATIONS CORP., LTD.) 07 July 2022 (2022-07-07)<br>  description, page 2, paragraph 21 to page 4, paragraph 21, and page 8, paragraph 13 to page 9, paragraph 26, and claims 1-58 | 1-48 |
| A | WO 2023014183 A1 (SAMSUNG ELECTRONICS CO., LTD.) 09 February 2023 (2023-02-09)<br>  entire document | 1-48 |
| A | QUALCOMM INCORPORATED. "Page monitoring in RRC_INACTIVE state with short eDRX, R2-2000538"<br>*3GPP TSG-RAN WG2 Meeting#109e*, 06 March 2020 (2020-03-06),<br>  entire document | 1-48 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **16 April 2024** | **24 April 2024** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/074608**

| Patent document cited in search report | | | Publication date (day/month/year) | Patent family member(s) | | | Publication date (day/month/year) |
|---|---|---|---|---|---|---|---|
| CN | 112788618 | A | 11 May 2021 | WO | 2021088503 | A1 | 14 May 2021 |
| WO | 2022141080 | A1 | 07 July 2022 | US | 2023337184 | A1 | 19 October 2023 |
| | | | | EP | 4271069 | A1 | 01 November 2023 |
| | | | | CN | 116548030 | A | 04 August 2023 |
| WO | 2023014183 | A1 | 09 February 2023 | KR | 20230021513 | A | 14 February 2023 |

Form PCT/ISA/210 (patent family annex) (July 2022)

**REFERENCES CITED IN THE DESCRIPTION**

**Patent documents cited in the description**

- CN 202310155155